# EUROPÄISCHE PATENTANMELDUNG

(11) **EP 1 086 858 A2**
(43) Veröffentlichungstag der Anmeldung: **28.03.2001**
(21) Anmeldenummer: 00120878.4
(22) Anmeldetag: 25.09.2000
(51) Int. Cl.: B60R 11/02, H04M 1/60

(54) **Aufbaukonzept für Mobilfunkgeräte und Aufnahmeteile zur Aufnahme dieser Mobilfunkgeräte**

(30) Priorität: 24.09.1999 DE 19945899
(71) Anmelder: SIEMENS AKTIENGESELLSCHAFT, 80333 München (DE)
(72) Erfinder: Heiss, Reinhold, 85232 Deutenhausen (DE)

(57) **Zusammenfassung**

Die Stecker bzw. Steckaufnahmen sowohl in den Mobilfunkgeräten als auch in den Aufnahmeteilen für die Mobilfunkgeräte zur elektrischen Verbindung der Mobilfunkgeräte mit Zusatzgeräten weisen unabhängig von der übrigen Ausgestaltung der Mobilfunkgeräte und der Aufnahmeteile einen definierten räumlichen Abstand zueinander auf, der in der Endlage des Mobilfunkgeräts ein reibungsloses Zusammenfügen der Stecker und Steckaufnahmen ermöglicht.

## Beschreibung

Die vorliegende Erfindung betrifft ein Aufbaukonzept für Mobilfunkgeräte mit Steckern bzw. Steckaufnahmen und Aufnahmeteile mit Steckern bzw. Steckaufnahmen zur Aufnahme dieser Mobilfunkgeräte, um diese elektrisch mit Zusatzgeräten zu verbinden.

In der heutigen Zeit ist die Verwendung eines Mobilfunkgerätes ohne irgendwelche Zubehörteile fast undenkbar. So besteht der Wunsch, das Mobilfunkgerät z. B. mit einer externen Antenne, mit einer Lauthör- und Sprecheinrichtung oder einem Ladegerät zu verbinden.

Gleichzeitig verändert sich das Design der Mobilfunkgeräte in immer kürzer werdenden Abständen. Dies hat zur Folge, daß jedesmal eine Änderung des Mobilfunkgerätes eine Änderung zumindest der Aufnahmeteile für die Mobilfunkgeräte, welche diese elektrisch mit den Zusatzgeräten verbinden, notwendig macht.

Aufgabe der vorliegenden Erfindung ist es, ein Aufbaukonzept der eingangs genannten Art anzugeben, mit welchem verhindert werden kann, daß bei der Einführung eines neuen Designs für ein Mobilfunkgerät gleichzeitig auch die Aufnahmeteile für das Mobilfunkgerät, um dieses elektrisch mit bestimmten Zusatzgeräten zu verbinden, verändert werden muß.

Diese Aufgabe wird erfindungsgemäß für das eingangs genannte Aufbaukonzept dadurch gelöst, daß die Stecker bzw. Steckaufnahmen zur elektrischen Verbindung der Mobilfunkgeräte mit den Zusatzgeräten sowohl in den Mobilfunkgeräten als auch in den Aufnahmeteilen unabhängig von der übrigen Ausgestaltung der Mobilfunkgeräte und Aufnahmeteile einen definierten räumlichen Abstand zueinander aufweisen, der in der Endlage des Mobilfunkgeräts ein reibungsloses Zusammenfügen der Stecker und Steckaufnahmen ermöglicht.

Das erfindungsgemäße Aufbaukonzept ermöglicht die Änderung des Designs von Mobilfunkgeräten, ohne daß gleichzeitig die Aufnahmeteile für diese Mobilfunkgeräte, um sie elektrisch mit Zusatzgeräten zu verbinden, geändert werden müssen.

Eine zweckmäßige Weiterbildung des erfindungsgemäßen Aufbaukonzept ist dadurch gekennzeichnet, daß die Mobilfunkgeräte jeweils eine mechanische Führungshilfe aufweisen, deren Gegenstücke sich in den eigentlichen Aufnahmen der Aufnahmeteile für das Mobilfunkgerät befinden, wobei die Führungshilfen ebenfalls unabhängig von der übrigen Ausgestaltung der Mobilfunkgeräte und Aufnahmeteile einen definierten räumlichen Abstand zu den Steckern bzw. Steckaufnahmen aufweisen. Dadurch ist immer eine erleichterte Einführung aller Mobilfunkgeräte in alle Aufnahmeteile gewährleistet.

Zweckmäßige Ausgestaltung des erfindungsgemäßen Aufbaukonzepts ergeben sich aus den weiteren Unteransprüchen sowie aus der nachfolgenden Beschreibung eines Ausführungsbeispiels des erfindungsgemäßen Aufbaukonzepts.

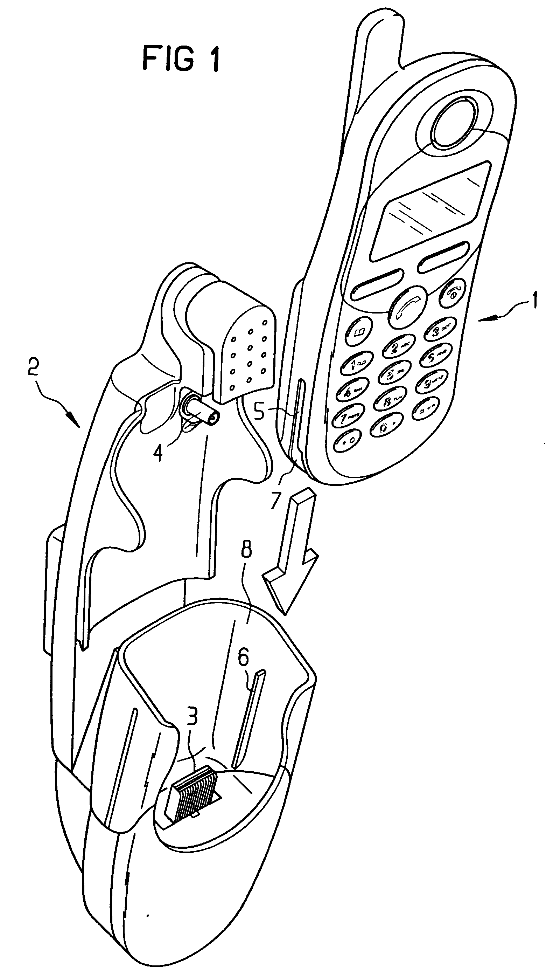

Es zeigen
Figur 1 in perspektivischer Darstellung ein Mobilfunkgerät und ein Aufnahmeteil zur Aufnahme des Mobilfunkgeräts in einem Zustand vor der Einführung des Mobilfunkgeräts in das Aufnahmeteil,

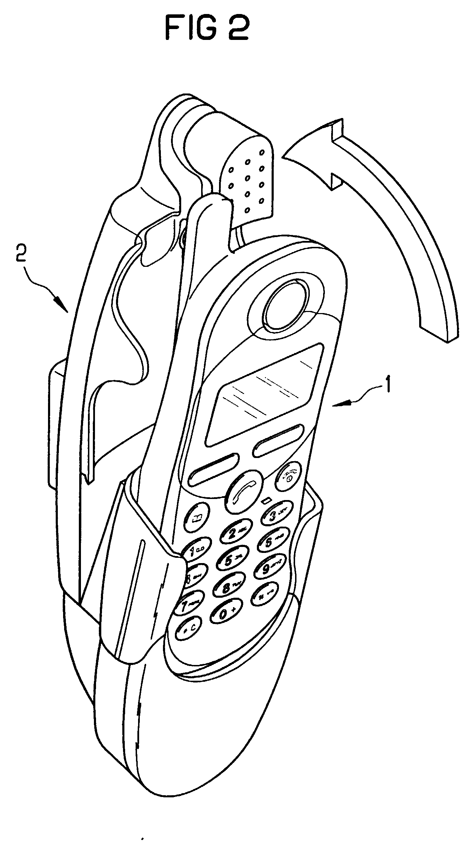

Figur 2 in perspektivischer Darstellung das Mobilfunkgerät und das Aufnahmeteil von Figur 1, wobei das Mobilfunkgerät in die eigentliche Aufnahme eingeführt ist, und

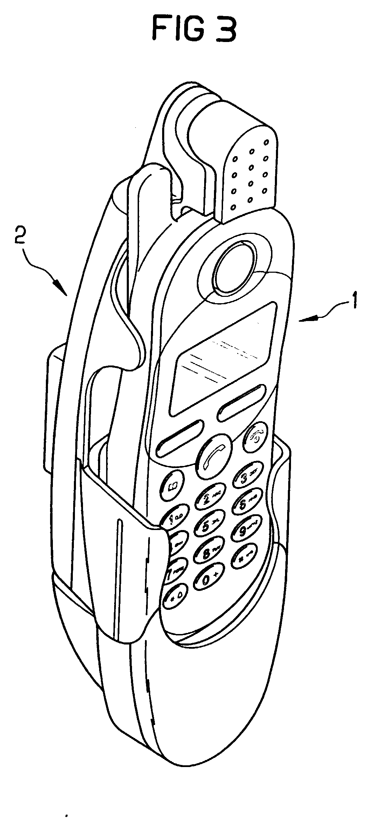

Figur 3 in perspektivischer Darstellung das Mobilfunkgerät und das Aufnahmeteil von Figur 1, wobei sich das Mobilfunkgerät in seiner Endlage befindet.

In dem dargestellten Beispiel ist ein Mobilfunkgerät 1 und ein Aufnahmeteil 2 zur Aufnahme dieses Mobilfunkgeräts 1, um es elektrisch mit bestimmten Zusatzgeräten zu verbinden, dargestellt. Bei dem dargestellten Aufnahmeteil 2 z. B. um einen sogenannten Cradle für die Verwendung in einem Kraftfahrzeug.

In dem Aufnahmeteil 2 befindet sich ein Mehrzweck-Stecker 3 zur Verbindung des Mobilfunkgeräts 1 mit z.B. einem Ladegerät oder einer Freisprecheinrichtung. Im oberen Teil des Aufnahmeteils 2 befindet sich ein Koax-Stecker 4 zum Verbinden des Mobilfunkgeräts 1 mit einer externen Antenne. Entsprechende Steckaufnahmen befinden sich unten und hinten an dem Mobilfunkgerät 1 (nicht dargestellt). Erfindungsgemäß besitzen diese Stecker bzw. die entsprechenden Steckaufnahmen einen definierten räumlichen Abstand voneinander. Dieser ist so gewählt, daß in der Endlage des Mobilfunkgeräts 1 in dem Aufnahmeteil 2 ein problemloses Zusammenfügen der Stecker und der Steckaufnahmen ermöglicht wird.

Um die Einführung des Mobilfunkgeräts in die eigentliche Aufnahme 8 des Aufnahmeteils 2 zu erleichtern, können mechanische Führungshilfen vorgesehen werden. Diese können z.B. aus Führungsnuten 5, die in den unteren Seitenbereichen des Mobilfunkgeräts 1 angebracht sind, und aus entsprechenden Führungsstegen, die an den entsprechenden inneren Seitenwänden der Aufnahme 8 vorgesehen sind, bestehen.

Das erfindungsgemäße Aufbaukonzept ist hier in Verbindung mit einem Aufnahmeteil, welches in einem Kraftfahrzeug verwendet wird, beschrieben. Es ist selbstverständlich denkbar, daß das erfindungsgemäße Aufbaukonzept auch z.B. bei einer Kombination von Mobilfunkgerät und Tischladeeinrichtung Anwendung finden kann.

Der Vorteil des erfindungsgemäßen Aufbaukonzepts liegt darin, daß das Design des Mobilfunkgeräts um die als Schnittstellen definierten Stecker bzw. Steckaufnahmen und mechanischen Führungshilfen herum völlig frei entwickelt werden kann. Dadurch ist es möglich, das Zubehör über mehrere Produktgenerationen von Mobilfunkgeräten mit unterschiedlichen Designvarianten hinweg zu benutzen.

Für den Benutzer ergibt sich dadurch auch der Vorteil, daß er beim Wechsel eines Mobilfunkgerätes z.B. die vorhandenen Kfz-Einbaukomponenten nicht wechseln muß.

Durch das erfindungsgemäße Aufbaukonzept ergeben sich erhebliche Einsparungen der Entwicklungsaufwände für das Zubehör, so daß die Zubehörkomponenten aufgrund der höheren Stückzahlen wesentlich kostengünstiger hergestellt werden können und in allen Fällen das Zubehör gleichzeitig mit dem neuen Gerät verfügbar ist.

## Patentansprüche

1. Aufbaukonzept für Mobilfunkgeräte mit Steckern bzw. Steckaufnahmen und Aufnahmeteile mit Steckern bzw. Steckaufnahmen zur Aufnahme dieser Mobilfunkgeräte, um diese elektrisch mit Zusatzgeräten zu verbinden,
**dadurch gekennzeichnet,**
daß die Stecker bzw. Steckaufnahmen (3, 4) zur elektrischen Verbindung der Mobilfunkgeräte (1) mit den Zusatzgeräten sowohl in den Mobilfunkgeräten (1) als auch in den Aufnahmeteilen (2) unabhängig von der übrigen Ausgestaltung der Mobilfunkgeräte (1) und Aufnahmeteile (2) einen definierten räumlichen Abstand zueinander aufweisen, der in der Endlage des Mobilfunkgeräts (1) ein reibungsloses Zusammenfügen der Stecker und Steckaufnahmen (3, 4) ermöglicht.

2. Aufbaukonzept nach Anspruch 1,
**dadurch gekennzeichnet,**
daß die Mobilfunkgeräte (1) jeweils eine mechanische Führungshilfe (5) aufweisen, deren Gegenstücke (6) sich in den eigentlichen Aufnahmen (8) der Aufnahmeteile (2) für die Mobilfunkgeräte (1) befinden, wobei die Führungshilfen (5, 6) ebenfalls unabhängig von der übrigen Ausgestaltung der Mobilfunkgeräte (1) und Aufnahmeteile (2) einen definierten räumlichen Abstand zu den Steckern bzw. Steckaufnahmen (3, 4) aufweisen.

3. Aufbaukonzept nach Anspruch 2,
**dadurch gekennzeichnet,**
daß als mechanische Führungshilfen an den Mobilfunkgeräten in den beiden unteren Seitenbereichen Führungsnuten (5) und an den entsprechende seitlichen Innenwänden der Aufnahmen (8) entsprechende Stege (6) vorgesehen sind.

4. Aufbaukonzept nach Anspruch 3,
**dadurch gekennzeichnet,**
daß die offenen Enden der Führungsnuten (5) Einlaufschrägen (7) aufweisen.
